# EUROPÄISCHE PATENTANMELDUNG

(11) **EP 0 620 973 A1**
(43) Veröffentlichungstag der Anmeldung: **26.10.1994**
(21) Anmeldenummer: 94106327.3
(22) Anmeldetag: 22.04.1994
(51) Int. Cl.: A21C 13/02, B65G 15/52

(54) **Brezengärschrank**

(30) Priorität: 23.04.1993 DE 4313409
(71) Anmelder: D F M PRODUCTS, NL-4815 HR Breda (NL)
(72) Erfinder: Schütz, Otto, D-81369 München (DE)
(74) Vertreter: Vogeser, Werner, Dipl.-Ing.

(57) **Zusammenfassung**

Die Erfindung betrifft einen Gärschrank für rohe Teiglinge, bspw. rohe Brezen, wie er in Backbetrieben verwendet wird, um die Teiglinge bei definierten Umweltbedingungen reifen zu lassen. Um eine solche Erfindung zu schaffen, ist es notwendig, daß der Gärschrank mit wenigstens einem Aufgabebereich, einer Gärzone, einer Absteifzone und wenigstens einer Abwurfzone bestückt ist.

## Beschreibung

Die Erfindung betrifft einen Gärschrank für rohe Teiglinge, bspw. rohe Brezen, wie er in Backbetrieben verwendet wird, um die Teiglinge bei definierten Umweltbedingungen reifen zu lassen.

Größere Gärschränke werden regelmäßig im Durchlaufverfahren betrieben, so daß in wenigstens einem Aufgabenbereich die Teiglinge in eine Fördereinrichtung, die den Gärschrank durchläuft, aufgegeben werden, und an einer anderen Stelle nach entsprechender Durchlaufzeit durch Abwurf den Gärschrank verlassen.

Aus der DE 37 12372 C2 ist bekannt, daß als Förderelemente bisher sogenannte Gehänge, oben offene, wannenförmige Behälter, verwendet wurden, die sich über die Breite des Gärschrankes erstrecken und in die die Teiglinge von oben her eingelegt werden. Diese Gehänge sind an den beiden Stirnseiten über Lagerzapfen in parallellaufende Ketten eingehängt. Diese Transportketten durchlaufen den Gärschrank mit seinen unterschiedlichen Zonen mäanderförmig, wobei sich die Größe des Gärschrankes in Abhängigkeit von der beabsichtigten Durchlaufzeit und Durchlaufmenge pro Stunde ergibt.

Als Fördermittel kommen, aus der US 26 64 188 ersichtlich, auch Riemen mit an ihnen befestigten Teiglingaufnehmern zum Einsatz, wobei diese Riemen durch Reibschluß um Umlenkrollen geführt sind.

Innerhalb des Gärschrankes durchlaufen die Teiglinge nach der Aufgabe zunächst eine Gärzone, in der eine Lufttemperatur von 30 bis 40 °C bei sehr hoher Luftfeuchtigkeit herrscht. Anschließend durchlaufen die Teiglinge eine Absteifzone, in welcher bei nur 10 bis 15 °C und geringer Luftfeuchtigkeit eine härtere Konsistenz der Teiglinge erzielt wird, um die nachfolgenden Bearbeitungsschritte wie Laugen, Besalzen etc. leichterer Handhabung durchlaufen zu können.

Ein solcher Gärschrank, ausgelegt für das permanente Beinhalten von ca. 450 Kg Teiglinge, ist etwa 4 Meter hoch und 12 bis 15 Meter lang. Dabei wurden bisher ca. 4,5 Tonnen Material für die Bewegung der nur 450 Kg Teiglinge mit bewegt, was allein aufgrund des Materialgewichts eine sehr schwere und stabile Gesamtkonstruktion des Gärschrankes und insbesondere der Lagerungselemente bedingte.

Einen wesentlichen Anteil an dem Gewicht des bewegten Materials haben dabei bisher die beiden, jeweils ca. 250 Meter langen Förderketten, die den zusätzlichen Nachteil besitzen, daß sie für eine reibungslose Funktion regelmäßig geschmiert werden müssen, uns sich an diesem Schmierfett oder -öl sehr schnell das im Gärschrank frei umherfliegende Mehl anlagert. Dies führt einerseits zu erhöhtem Verschleiß an den Maschinenteilen und stellt andererseits eine ständige Verschmutzungsquelle für die Teiglinge dar.

Es ist daher die Aufgabe gemäß der Erfindung, einen gattungsgemäßen Gärschrank so weiterzubilden, daß trotz möglichst einfacher und leichter Konstruktion ein möglichst preisgünstiges, ausfallsicheres Betreiben des Gärschrankes möglich ist.

Die Ausfallsicherheit bzw. die Geschwindigkeit, mit der Ausfälle des Gärschrankes wieder behoben werden können, ist für derartige Anlagen ein vorrangiges Kriterium, da diese in der Regel ein unverzichtbares nicht redundant vorhandenes Glied in einer industriellen Backstraße darstellen.

Die oben genannte Aufgabe ist bei einem gattungsgemäßen Gärschrank durch die kennzeichnenden Merkmale des Anspruches 1 gelöst. Weitere Ausführungsformen ergeben sich aus den Unteransprüchen.

Konstruktive Verbesserungen hinsichtlich Gewichtseinsparung und verbesserte Montage- und Wartungsfreundlichkeit ergeben sich durch einerseits einen modularen Aufbau des Gärschrankes und andererseits den Einsatz von ungeschmierten, lebensmittelechten Zahnriemen aus Kunststoff als Förderelement für die Gehänge. Ein solcher Zahnriemen hat einen Gewichtsvorteil von mehr als 50% gegenüber einer herkömmlichen Kette aus Metall. Damit ist die bewegte Masse deutlich reduziert und sämtliche Umlenkstellen und Unterstützungselemente für die bewegten Massen können schwächer dimensioniert und damit leichter werden. Dadurch ist insgesamt ein weniger schweres und leichter zu montierendes Gerüst für den Gärschrank ausreichend.

Dieses Gerüst besteht aus Einzelrahmen, die in Gesamtdurchlaufrichtung des Gärschrankes hintereinander gesetzt und beplankt werden. Die Einzelrahmen bestehen dabei aus seitlichen Rahmenelementen, die durch einige Querstreben fest miteinander verbunden sind. Diese fest angeordneten Querstreben können nur an solchen Punkten vorhanden sein, die später nicht von den Zahnriemen umlaufen werden, also bspw. an den Oberkanten der Rahmen oder ihren Fußpunkten.

Mit dieser geringen Anzahl fester Querverbindungen werden die Einzelrahmen miteinander verschraubt und beplankt sowie mit dem gesamten Innenleben also Antrieben, Zahnriemen und Gehängen, bestückt. Erst nach dem Einsetzen der Zahnriemen werden zwischen den seitlichen Rahmenelementen weitere, lösbare Querstreben im Gärschrank eingesetzt, die die für den Betrieb notwendige Steifigkeit des gesamten Gehäuses bewirken. Dadurch kann hinsichtlich der fest angeordneten Querstreben mit einer verringerten Anzahl ausgekommen werden.

Der gesamte Gärschrank läßt sich modular erweitern, indem Einzelrahmen für jeden Aufgabebereich, für die Gärzone zwischen den einzelnen Aufgabebereichen, für die Absteifungszone sowie für ein Zwischenteil zwischen Gärzone und Absteifzone unterschieden werden, in welchem sich die Antriebseinheit befindet.

Da die Aufgabe in dem Gärschrank nach wie vor manuell erfolgt, wird im Aufgabebereich das Gehänge bis auf Arbeitshöhe zur manuellen Beschickung herabgeführt und anschließend wieder in die Gärzone, die sich oberhalb des Aufgabebereiches befindet, hinaufgeführt. Bei mehreren Aufgabebereichen, die sich in Gesamtdurchlaufrichtung des Gärschrankes im Abstand hintereinander befinden, befindet sich die Gärzone durchgehend oberhalb dieser Aufgabebereiche, also über Kopfhöhe der an der Aufgabestelle arbeitenden Bediener. Die einzelnen Rahmen, bspw. der Aufgabebereichs-Rahmen, erstrecken sich durchgängig über die gesamte Höhe des Gärschrankes, während die Abstände zwischen den Aufgabebereichen durch Gärzonen-Rahmen ergänzt werden, die oberhalb der Kopfhöhe beginnen und sich zum oberen Rand des Gärschrankes erstrecken.

Zusätzlich kann die Versteifungszone bzw. der dafür vorgesehene Rahmen, an dessen Ende sich die Abwurfzone befindet, durch Erweiterungseinheiten vergrößert werden, bspw. die zwischen den Aufgabebereichen eingesetzten Gärzonen-Rahmen, um die gewünschte Mengenkapazität des Gärschrankes zu erreichen.

Um den Reifeprozeß der Teiglinge zu optimieren, ist die Beplankung der Rahmen mit einer isolierten, reinigungsfreundlichen Beplankung vorgenommen, vorzugsweise doppelwandigen Blechplatten aus nichtrostendem Blech, mit wenigstens einer dazwischen angeordneten Polyurethanschicht.

Ein Großteil der Seitenflächen des Gärschrankes ist statt mit einer festen Beplankung mit Klapptüren ausgestattet, deren Größe jeweils der gesamten seitlichen Erstreckung eines Einzelrahmens entspricht. Diese Klapptüren bestehen aus Isolierglas-Scheiben, die in Leichtmetallprofilen gefaßt sind. Dadurch ist eine jederzeitige Beobachtung des Ablaufes im Gärschrank möglich.

Die Klimabedingungen im Inneren des Gärschrankes werden hierdurch positiv beeinflußt, da von den Außenwänden zum Inneren des Gärschrankes hin nur noch ein sehr abgeschwächtes Temperaturgefälle vorhanden ist. Zusätzlich wird die in den Gärschrank eingebrachte, in der Gärzone vorgewärmte und angefeuchtete, in der Versteifungszone dagegen abgekühlte, Luft beim Ansaugen gefiltert, so daß keine Verschmutzung von außen zugeführt wird. Ein Eindringen von äußerem Schmutz wird weiterhin dadurch verhindert, daß der Gärschrank während des Betriebes unter einem ständigen Überdruck gehalten wird, weswegen sowohl Beplankung als auch Klapptüren druckdicht mittels entsprechender Dichtungen an den Rahmenteilen außen aufliegen.

Weiterhin werden die Zahnriemen und damit die Gehänge im Bereich der Gärzone oberhalb der Aufgabestellen in waagerechten Mäandern, die sich über die gesamte Länge der Gärzone erstrecken, von unten nach oben fortlaufend hindurchgeführt. Jede dieser Mäander durchläuft dabei die Gesamtlänge der Gärzone, also die Breite der einzelnen Aufgabebereiche sowie die Breiten der dazwischen liegenden Gärzonen-Rahmen im ganzen. Aufgrund der innerhalb der Gärzone vorhandenen vertikalen Temperaturschichtung durchlaufen die Teiglinge damit die Gärzone von der geringsten zur höchsten Temperatur hin.

Dagegen werden die Zahnriemen in der Absteifungszone, und zwar zumindest in deren Hauptbereich, in senkrechten Mäandern geführt, und dabei durch abwechselndes Absenken und leichtes Erhöhen der Temperatur auf tiefem Basisniveau sehr schnell abgekühlt.

Bei den waagerecht geführten Mäandern der Gärzone würden die Zahnriemen aufgrund des großen Abstandes ihrer Umlenkrollen zu stark durchhängen, und müssen wenigstens in Teilbereichen durch Gleitschienen unterstützt werden.

Diese Gleitschienen bestehen aus unterhalb des Zahnriemen-Niveaus über Winkelprofile in veränderbarem Abstand an der Rahmen-Innenseite befestigte, nach oben offene C-Profile. In bzw. oberhalb dieser C-Profile sind Profile mit H-förmigem Querschnitt in Längsrichtung eingeschoben, wobei die freien Enden des C-Profiles in die Einbuchtungen des liegenden H-Profiles hineinpassen und nach Verbindung der beiden Teile eine weitere Längsverschiebung über Querstifte verhindert wird. Das H-Profil besteht dabei aus einem wenigstens an seiner Oberseite sehr gut gleitendem Material. Vorteilhafterweise besteht das gesamte H-Profil aus Teflon. Dabei kann ebenfalls auf eine Schmierung etc. zwischen der Gleitfläche der Gleitschiene und dem Zahnriemen vollständig verzichtet werden.

Als Zahnriemen kommen sowohl beidseitig gezahnte als auch einseitig gezahnte, vorteilhafterweise jedoch nur endlose Zahnriemen in Betracht. Endlose Zahnriemen besitzen bei gleichen Außenabmessung aufgrund der in ihrem Inneren endlos angeordneten Zugelemente eine höhere Zug- und Reißfestigkeit.

An die Zahnriemen werden die Gehänge befestigt, indem von den Gehängen aus Lagerzapfen nach außen reichen, die in entsprechenden in oder an den Zahnriemen befestigten Buchsen geführt sind. Beidseits gezahnte Zahnriemen besitzen den Vorteil, daß bei zur Mittellinie des Zahnriemens symmetrischer Ausbildung sich die beiderseitigen Zähne des Zahnriemens jeweils gegenüberliegen und indem durch zwei Zähne verdickten Bereich derartige Buchsen oder andere Befestigungselemente für die Gehänge unmittelbar eingearbeitet werden können. Der Nachteil zweiseitig gezahnter Zahnriemen liegt in einem höheren Preis sowie einem geringeren Biegeradius in Richtung der gezahnten Seite, also zu beiden Seiten hin, während ein nur einseitig gezahnter Zahnriemen bei Umlenkung um eine auf der glatten Seite liegende Umlenkrolle mit einem geringeren Biegeradius umgeleitet werden kann, wodurch sich bei der großen Anzahl notwendiger Umlenkungen geringere Außenabmessungen des Gärschrankes ergeben.

Dafür ist bei einem einseitig gezahnten Zahnriemen die Materialstärke selbst im Bereich der Zähne in der Regel nicht ausreichend, um dort Buchsen oder andere Befestigungselemente zur Aufnahme der Lagerzapfen der Gehänge aufzunehmen. Daher werden Klötze aus gummiartigem Material, die derartige Buchsen oder andere Befestigungselemente enthalten, auf der nicht gezahnten, also in der Regel glatten, Seite des Zahnriemens aufgeschweißt oder aufvulkanisiert.

Dies bedingt einerseits entsprechende Aussparungen bei den für die glatte Seite vorgesehenen Umlenkrollen und andererseits eine Lage der Gleitschienen unterhalb des Zahnriemens neben den nur einseitig aufgebrachten Klötzen, und damit keine vollständig mittige Unterstützung der Zahnriemen.

Bei einem doppelt gezahnten, symmetrisch ausgebildeten Zahnriemen wie oben beschrieben, können dagegen an allen Umlenkstellen die gleichen, gezahnten Umlenkrollen verwendet werden.

Unabhängig von der Bauform der Zahnriemen sind in dem Zahnriemen die Aufnahmebuchsen oder andere Befestigungselemente in wesentlich geringeren Abständen angeordnet, als es dem Abstand der Gehänge im normalen Betrieb entspricht. Beispielsweise sind in der Länge zwischen zwei Gehängen zwei bis drei zusätzliche Buchsen in dem Zahnriemen angeordnet.

Dieser ermöglicht es, bei Beschädigung einzelner Befestigungselemente nur einzelne Gehänge um eine Position im Zahnriemen umzuhängen, wodurch man zwar eine Reduzierung der Gesamtzahl der aufgenommenen Gehänge um einige wenige Gehänge, also einige wenige Promille in Kauf nimmt, dafür aber insgesamt sehr schnell den Gärschrank wieder in Betrieb setzen kann.

Bei den auf der glatten Seite eines einseitig gezahnten Zahnriemens aufgesetzten Klötzen empfiehlt es sich, diese Klötze mittels einer speziellen Schweißvorrichtung, die an jeder beliebigen Stelle des Gärschrankes am Rahmen befestigt werden kann, schnell erneuern zu können, ohne daß hierfür Demontagearbeiten am Gärschrank oder am Zahnriemen notwendig wären. Eine gute Zugänglichkeit ist durch die vollständige Abdeckung der Seitenflächen durch Klapptürren gewährleistet.

Um einen möglichst störungsfreien Betrieb des Gärschrankes zu gewährleisten, muß der Parallellauf der beiden Zahnriemen so gut als möglich synchronisiert sein.

Zu diesem Zweck werden einerseits beide Zahnriemen vorzugsweise von nur einem Motor aus angetrieben, obwohl jeder Zahnriemen an zwei über seine Gesamtlänge jeweils gegenüberliegenden Stellen mit einer Antriebsscheibe angetrieben wird. Diese beiden Antriebsscheiben jedes Zahnriemens liegen jedoch örtlich nahe zusammen, nämlich im unteren Bereich des Zwischenteil-Rahmens, also am Übergang zwischen Gärzone und Absteifzone. An dieser Stelle läuft einerseits ein Trum des Zahnriemens in die Gärzone hinein, während das andere Trum gerade die Gärzone verläßt und in die Absteifzone eintritt, wobei die Gärzone etwa die Hälfte der Zahnriemenlänge aufnimmt.

Der Antriebsstrang für die je zwei Antriebsscheiben pro Zahnriemen ist dabei so aufgebaut, daß eine der Antriebsscheiben von dem Elektromotor angetrieben wird, die Drehung mittels einer drehfest mit den Antriebsscheiben verbundenen Welle auf die gegenüberliegende Antriebsscheibe des anderen Zahnriemens an analoger Stelle übertragen wird, und auf dieser, vom Motor gegenüberliegenden Außenseite des Gärschrankes eine Ketten-Verbindung zwischen den beiden dortigen Antriebsscheiben des gleichen Zahnriemens vorhanden ist.

Die über Kette angetriebene zweite Antriebsscheibe ist wiederum mittels einer Querwelle drehfest mit der letzten Antriebsscheibe, die auf der Seite des Motors angeordnet ist, drehfest verbunden.

Wenn anstelle einer Querachse eine nicht drehfest mit den Antriebsscheiben verbundene Querachse verwendet wird, sind zusätzliche Synchronisierungseinheiten vorzusehen. Dies können entweder zwei über Querwellen drehfest verbundene, analoge Umlenkrollen für die beiden Zahnriemen sein, die in regelmäßigen Abständen von etwa 10 Meter Zahnriemenlänge angeordnet sind.

Dies können auch einander entsprechende mechanisch nicht drehfest gekoppelte, gezahnte Umlenkrollen sein, die mit einem Sensor am Umfang ausgerüstet sind, welcher den Durchlauf eines bestimmten, mit einem Signalgeber ausgestatteten Zahnes registriert und über einen Vergleicher den Phasenversatz zwischen den Durchläufen der entsprechenden Zähne bei den einander entsprechenden Umlenkrollen der beiden Zahnriemen feststellt und den Antrieb aus Sicherheitsgründen abschaltet, wenn dieser Phasenversatz einen vorgegebenen Maximalwert überschreitet, da ansonsten ein Verklemmen oder gar Reißen der teueren Zahnriemen möglich wäre. Die einzelnen, nicht in Querrichtung drehfest gekoppelten Umlenkrollen sind hinsichtlich ihrer genauen Lage justierbar, indem das Unterteil ihres Lagerbockes auf einer rahmenfesten Grundplatte verschraubt wird, von welcher Schraubbolzen aufragen. Die entsprechenden Bohrungen in den Unterteilen der Lagerböcke sind deutlich größer als die Schraubbolzen, und zusätzlich weist das Unterteil quer zu der Erstreckung der Schraubbolzen Justierschrauben auf, mit deren Hilfe die Lager des Unterteiles zum Rahmen justiert werden können.

Um für den Antrieb keinen zusätzlichen Platzbedarf außerhalb der normalen Verkleidung des Gärschrankes zu benötigen, und andererseits auch nicht die Breite des Gärschrankes über das durch die Gehänge, also den Abstand der Zahnriemen vorgegebene Maß hinaus insgesamt vergrößern zu müssen, ist die Koppelung der auf der gleichen Seite mittels Kette verbundenen Antriebsscheiben im Bereich der Rahmendicke realisiert. Zu diesem Zweck ist bündig mit der Außenfläche des Rahmens zwischen die Rahmenprofile, die vorzugsweise aus geschlossenen Vierkantprofilen bestehen, eine Außenplatte eingeschweißt, die eine Aussparung besitzt, in welche ein entsprechender Endflansch am Ende der Querwelle mit ausreichend viel Spielraum hineinpaßt. Zusätzlich sind, in der Ebene der Außenplatte innerhalb der Außenplatte oder innerhalb des Endflansches rechtwinklig zueinander verlaufende Stellschrauben angeordnet, mit deren Hilfe der Flansch und damit die gesamte Querwelle oder Querachse nach oben und unten bzw. vor und zurück bezüglich des Rahmens verschoben werden kann.

Eine Ausführungsform gemäß der Erfindung ist im folgenden beispielhaft näher beschrieben. Es zeigen:
- Figur 1:: eine Seitenansicht des gesamten Gärschrankes,
- Figur 2:: die Unterstützung des waagerecht laufenden Zahnriemens durch beidseitige Gleitschienen,
- Figur 3:: einen Lagerbock für Umlenkrollen,
- Figur 4:: eine Aufsicht auf den Antriebsstrang,
- Figur 5:: Zahnriemen-Varianten,
- Figur 6:: einen Lagerbock und
- Figur 7:: eine Umlenkrolle.

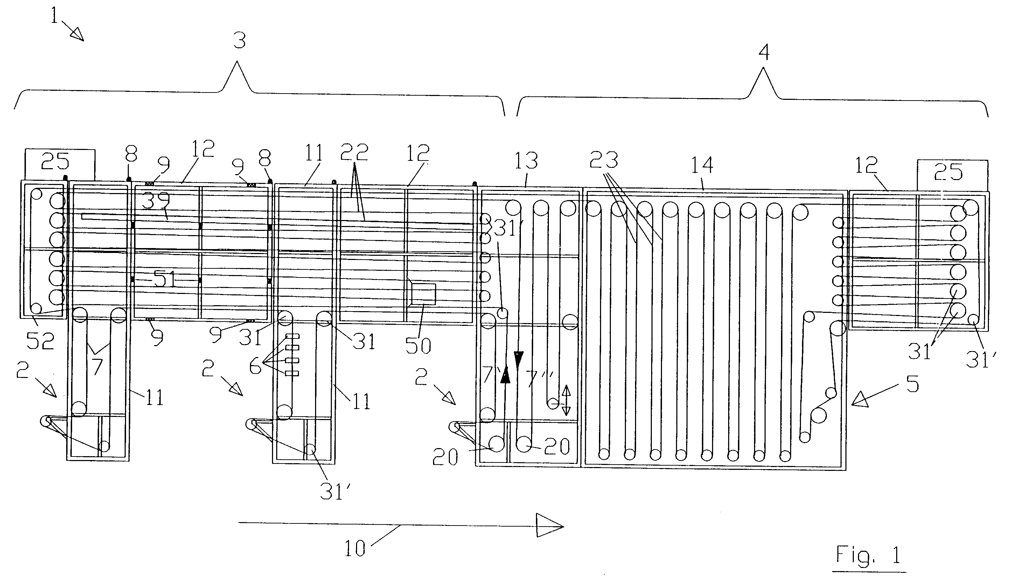

Figur 1 zeigt einen vollständigen Gärschrank in der Seitenansicht, der im wesentlichen eine Gärzone 3 und eine Absteifzone 4 umfaßt.

Die Gärzone 3 besteht aus hintereinander befestigten Aufgabebereichs-Rahmen 11, die sich über die gesamte Höhe des Gärschrankes 1 erstrecken, sowie dazwischen angeordneten Gärzonen-Rahmen 12, die zwischen den Aufgabebereichs-Rahmen 11 oberhalb der Kopfhöhe angeordnet sind. An den letzten Gärzonen-Rahmen 12 schließt sich der Zwischenteil-Rahmen 13 an, der den Übergang zwischen Gärzone 3 und Absteifzone 4 darstellt und in dem auch die Antriebe für die Zahnriemen untergebracht sind.

Die Größe des anschließenden Absteif-Rahmens 14 hängt von der Kapazität der Gärzone 3 ab, und kann durch eine die Absteifzone 4 erweiternden Gärzonen-Rahmen 12, der sich dann oberhalb der Abwurfzone 5 befindet, erweitert werden.

Wie in der linken Hälfte der Figur 1 zu erkennen, sind innerhalb der Gärzone 3 die Zahnriemen 7 in waagerechten Mäandern 22 über Umlenkrollen 31 geführt.

Dabei befinden sich die rechten Umlenkrollen der Gärzone 3 bereits innerhalb des Zwischenteil-Rahmens 13, während sich die vorderen Umlenkrollen 31 innerhalb eines Zusatz-Rahmens 52 befinden. Von dem untersten Zahnriemen-Trum aus werden die an den Zahnriemen 7 befestigten Gehänge 6 innerhalb der Aufgabebereichs-Rahmen 11 nach unten in den Aufgabebereich 2 geführt, der sich in Arbeitshöhe des Bedienungspersonals befindet, und in den die Teiglinge, meist von Hand, in die Gehänge 6 eingelegt werden.

Innerhalb der Absteifzone 4, also innerhalb des Zwischenteil-Rahmens 13 sowie des Absteif-Rahmens 14 werden die Zahnriemen 7 dagegen in Form senkrechter Mäander 23 über Umlenkrollen 31 geführt, die sich auf waagerechten Querstreben in den Seitenteilen dieser Rahmen befinden.

Dabei ist zu erkennen, daß die linken bzw. rechten Umlenkrollen 31 der Gärzone 3 sowie die oberen bzw. unteren Umlenkrollen 31 der Absteifzone 4 jeweils unterschiedlichen Durchmesser aufweisen, was durch die Verwendung eines nicht symmetrischen, in der Regel nur einseitig verzahnten, Zahnriemens möglich ist, da ein derartiger Zahnriemen eine Biegung um die unverzahnte Seite herum mit einem geringere Biegeradius gestattet als auf der verzahnten Seite.

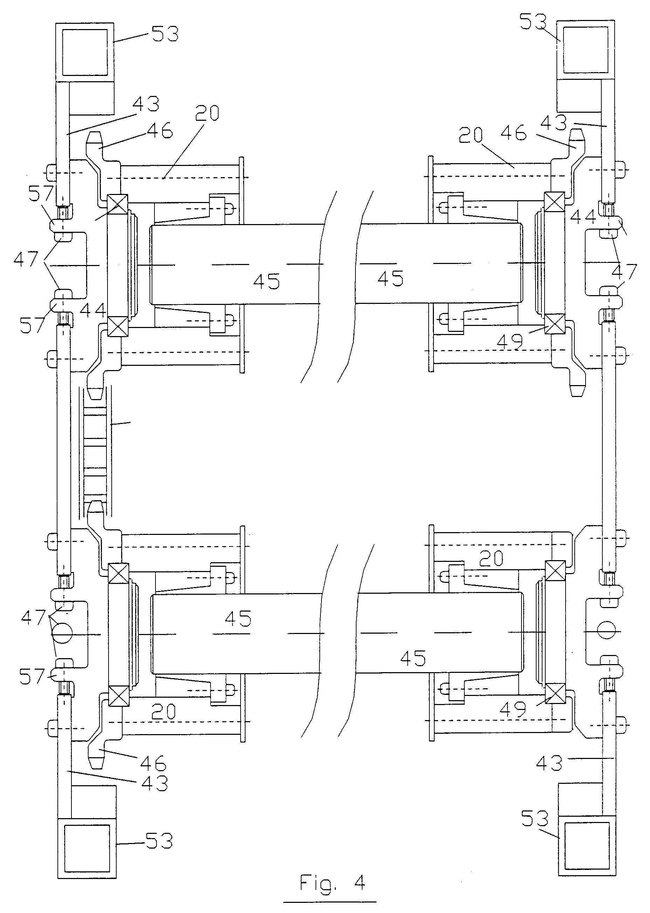

Innerhalb des Zwischenteil-Rahmens 13 werden dabei nebeneinander sowohl das unmittelbar mit der Gärzone 3 momentan in Kontakt stehenden Trum 7' des Zahnriemens nach unten geführt, als auch das unmittelbar mit der Absteifzone 4 in Verbindung stehende Trum 7'', zwischen denen jeweils etwa die Hälfte der Zahnriemenlänge liegt. Beide Trume 7', 7'' werden durch unten liegende Umlenkrollen, die als Treibscheiben 20 ausgebildet sind, angetrieben, wie im Detail in Figur 4 dargestellt.

In der Abwurfzone 5 werden die Gehänge 6 zusätzlich zur Umlenkung während eines Überhanges des Zahnriemens gekippt, wodurch die gereiften Teiglinge in eine anschließende Weiterbearbeitungs-Vorrichtung entleert werden.

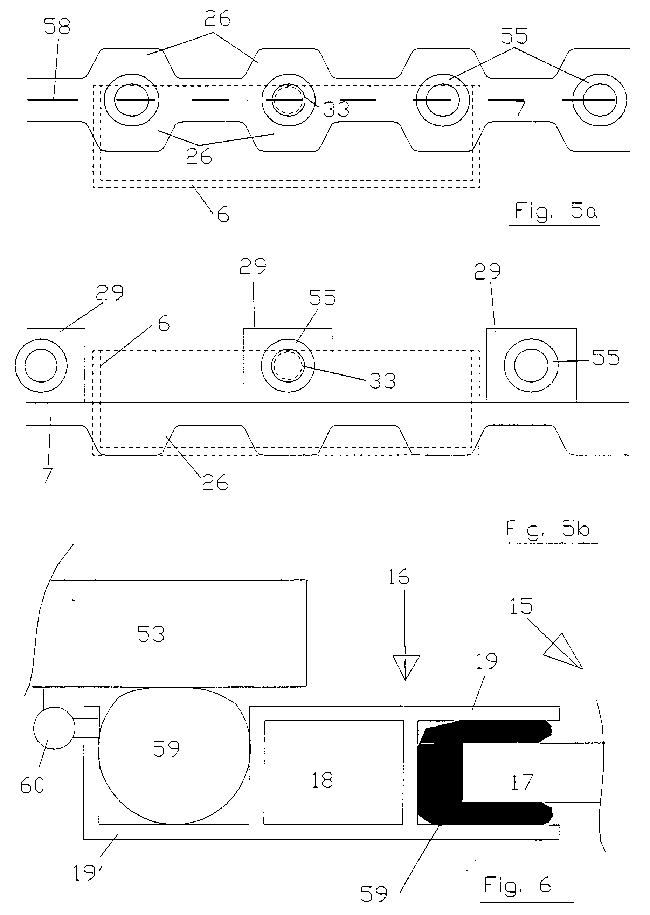

Auf der Oberseite des Gärschrankes 1 sind dabei an den Fugen zwischen den einzelnen Teil-Rahmen die Scharniere 8 zu erkennen, an welchen die sich über die gesamten Seitenflächen der einzelnen Teilrahmen erstreckenden Klapptüren 15 befestigt sind, deren Aufbau besser in Figur 6 dargestellt ist. Es sind ferner in Querschnittsdarstellung die fest montierten Querstreben 9 zu erkennen, die nicht von dem Zahnriemen 7 umlaufen werden, sowie die lösbaren Querstreben 51, die sich zwischen den einzelnen Trumen des Zahnriemens befinden und erst nach dessen Einsätzen montiert werden können.

Es ist ferner beispielhaft in der Gärzone eine Gleitschiene 39 zur Unterstützung des Zahnriemens 7 eingezeichnet, sowie die Schweißvorrichtung 50, die an jeder Stelle des Rahmens angesetzt werden kann.

Ebenso sind von den Gehängen 6 nur einige wenige beispielhaft eingezeichnet, während in der Realität der gesamte Zahnriemen mit in der Regel gleichen Abständen mit den Gehängen 6 bestückt ist.

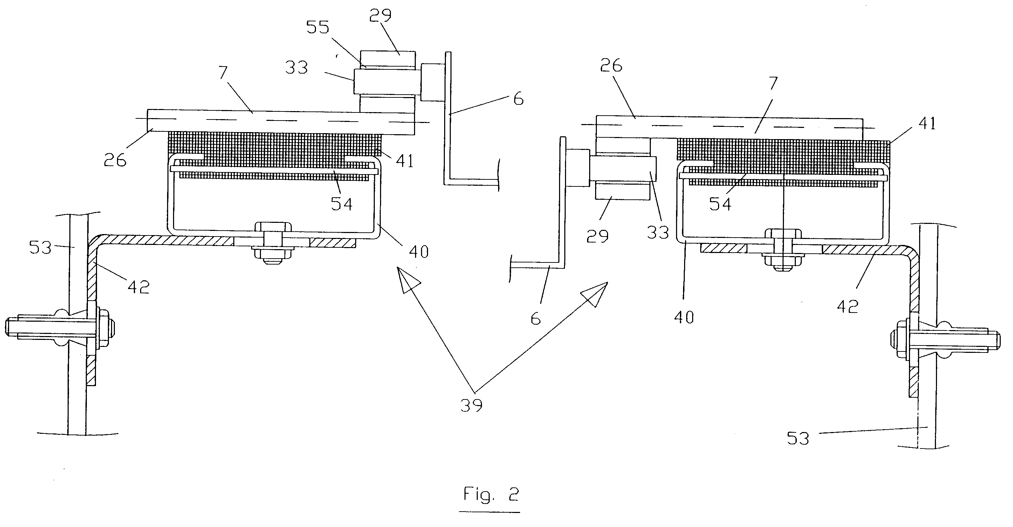

Figur 2 zeigt eine Querschnittsdarstellung der Gleitschienen, die die beidseitigen Zahnriemen 7 unterstützen. Dabei handelt es sich um unsymmetrische Zahnriemen 7, wie im Detail in Figur 5B dargestellt.

Beide Gleitschienen 39 bestehen aus einem in Längsrichtung des Zahnriemens 7 sich erstreckenden, im wesentlichen unterhalb des Zahnriemens 7 angeordneten, nach oben offenen C-Profil 40, welches mit dem waagerechten Schenkel eines Winkelprofiles 42 verschraubt und an dem Rahmen 53 befestigt ist.

In das C-Profil 40 ist die Gleitauflage 41 mit liegendem, H-förmigen Querschnitt eingeschoben und durch Querstifte 54 gesichert. Dabei wird nur die obere Hälfte des Innenraumes des C-Profiles 40 ausgefüllt, so daß die untere Hälfte zur Verschraubung mit dem Winkelprofil 42 zur Verfügung steht.

Die Gleitauflage 41 ist wenigstens auf ihrer Oberseite mit einem Material mit guten Gleiteigenschaften, vorzugsweise mit Teflon beschichtet, oder besteht wie bei der in Figur 2 dargestellten Lösung vollständig aus Teflon, so daß auf eine Schmierung gegenüber dem Zahnriemen 7 verzichtet werden kann.

In den linken beiden Hälften der Figur 2 laufen die Zahnriemen 7 in entgegengesetzten Richtungen, weshalb sich in der linken Hälfte der Figur 2 die Zähne 26 auf der Unterseite des Zahnriemens 7 befinden, und die Klötze 29, in deren Hülse 55 die Lagerzapfen 33 des Gehänges 6 schwenkbar gelagert sind, auf der Oberseite. Die Klötze 29 erstrecken sich dabei nur über einen Teil der Breite des Zahnriemens 7, etwa ein Viertel dessen Breite, so daß bei nach unten hängenden Klötzen 29, wie in der rechten Hälfte der Figur 2 dargestellt, die Gleitschienen 39 näher am Rahmen 53 montiert werden und damit außerhalb des Bereiches der Klötze 29 unterhalb dem Zahnriemen 7, der dann mit seiner glatten Fläche auf der Gleitauflage 41 läuft. Aufgrund einer Langlochausbildung im oberen waagerechten Schenkel des Winkelprofiles 42 sind dennoch die Gleitschienen 39 sowie die Winkelprofile 42 für beide Varianten identisch.

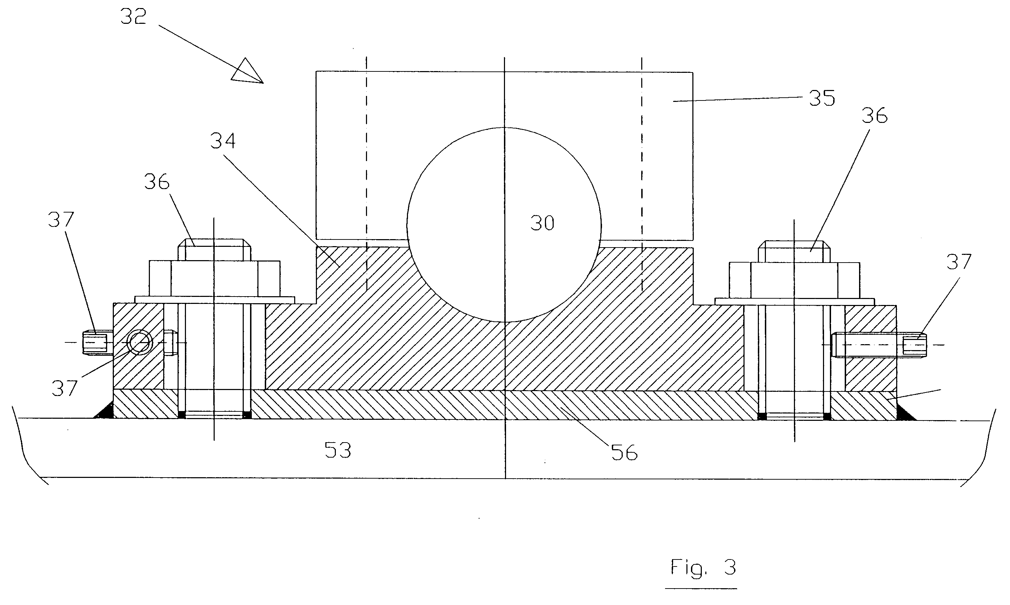

Figur 3 zeigt einen Lagerbock 32, in dem die Achse 30 festgeklemmt wird, um deren Achsstummel sich die einzelne Umlenkrolle 31 dreht.

Der Lagerbock besteht aus einem auf das Unterteil 34 aufgeschraubten Oberteil 35, die einander entsprechende, halbrunde Aussparungen für die Aufnahme der Achse 30 aufweisen. Das Unterteil 34 ist dabei auf eine rahmenfeste Basisplatte 56 aufgeschraubt, von welchem Schraubbolzen 36 gegen den Lagerbock zu hervorstehen. Die entsprechenden Durchbrüche 36' sind deutlich größer als die Dicke des Schraubbolzens 36. Durch in der Ebene des Unterteiles 34 quer zur Richtung des Schraubbolzens 36 und quer zueinander angeordnete Justierschrauben 37 kann durch Abdrücken vom Schraubbolzen 36 das Unterteil 34 gegenüber der Basisplatte 56 in beiden Richtungen, also parallel zur Ebene der Basisplatte 56' verschoben und justiert werden.

Dadurch ist eine genaue Einstellung der Position der Umlenkrollen und damit ein sehr guter Gleichlauf des Zahnriemens 7 gewährleistet.

Figur 4 zeigt eine Detaildarstellung des Anstriebsstranges in der Draufsicht: Dabei treiben die in der Fig. 4 beiden oberen Treibscheiben 20 beidseits an der einen Stelle die nicht dargestellten Treibriemen 7 an, während die in der unteren Bildhäfte dargestellten Treibscheiben 20 die zweite Antriebsstelle bilden, wobei zwischen erster und zweiter Antriebsstelle jeweils etwa die Häfte der Zahnriemen 7 liegt.

Alle vier Antriebsscheiben sind drehfest miteinander gekoppelt, und werden von einem einzigen, in der Figur nicht sichtbaren Motor 24 angetrieben.

Dieser Motor treibt über eine Kette und das rechte obere Kettenritzel 46 die rechte obere, mit diesem Ritzel drehfest verschraubte Treibscheibe 20 an. Die Treibscheibe 20 ist wiederum mittels einer konischen Klemmvorrichtung drehfest mit der oberen Querachse 45 verbunden, auf deren linkem Ende die linke obere Treibscheibe 20, das entsprechende Kettenritzel 46 drehfest befestigt sind. Das linke obere Kettenritzel 46 treibt über die Kette 48 das linke untere Kettenritzel 46 und damit die untere Querachse 45 drehfest gekoppelt an, so daß die beiden Antriebsstellen mechanisch synchronisiert sind. Von der linken unteren Seite aus erfolgt wiederum mechanische Drehverbindung über die gleiche Ausbildungsform wie bei der anderen Querachse 45 zurück zur rechten Seite, also in Fig. 4 im rechten unteren Bildteil.

An allen vier Enden der beiden Querachsen 45 ist folgende übereinstimmende Ausbildung festzustellen:

Die jeweilige Treibscheibe 20 ist mit dem Kettenritzel 46 drehfest verschraubt, lediglich bei der rechten unteren Ausbildung als Ende des Antriebsstranges ist ein solches Kettenritzel 46 nicht mehr notwendig.

Die drehfeste Einheit der Treibscheiben ist einerseits mit dem Außenumfang der Querachsen 45 verklemmt und andererseits über Lager 49 auf einem nach innen ragenden Zapfen eines plattenförmigen Endflansches 44 gelagert. Dieser Endflansch 44 ist jeweils vom inneren des Gärschrankes her mit einer Außenplatte 43, die mit bündigen Außenflächen mit dem Rahmen 53 des Gärschrankes verschweißt ist, verschraubt.

Der Endflansch 44 ragt dabei mit Fortsätzen 57 in einen größeren Durchlaß der Außenplatte 43 hinein, wobei sich Justierschrauben 47 durch diese Fortsätze 57 hindurch in alle vier Richtungen in der Ebene der Außenplatte 43 erstrecken, wodurch sich die Relativlage des Endflansches 44 in der Ebene der Außenplatte 43 einstellen und justieren läßt.

Durch die flache Ausbildung des Endflansches 44 ist es möglich, daß das jeweilige Kettenritzel 46 sich noch innerhalb der Breite des Rahmens 53 befindet, also kein zusätzlicher Abstand zwischen der Lage der Treibscheiben 20, die ja die Lage des Zahnriemens 7 repräsentieren und der Innenseite des Rahmens 53 eingehalten werden muß.

In den Fig. 5a und 5b sind unterschiedliche Ausbildungsformen von Zahnriemen dargestellt.

Fig. 5a zeigt einen zu seiner Seitenansicht betrachtet Längsmittelebene symmetrisch aufgebauten Zahnriemen 7, bei dem die Zähne 26 oberhalb und unterhalb der Längsmittelebene 58 sich jeweils gegenüberliegen.

In diesem durch die beidseits vorhandenen Zähne verdickten Bereich des Zahnriemens sind jeweils oder in regelmäßigen Abständen Hülsen 55 oder andere Befestigungselemente zum Aufnehmen der Lagerzapfen 33 für die Gehänge 6 eingearbeitet.

Mit gestrichelten Linien ist eines der Gehänge 6 mit seinem Lagerzapfen 33 eingezeichnet, woraus ersichtlich ist, das der Abstand der Hülsen 55 im Zahnriemen 7 deutlich geringer ist, als der Abstand der in den Zahnriemen 7 eingehängten Gehänge 6, die in der Regel nur mittig über jeweils einen Schwenkzapfen 33 auf jeder Stirnseite verfügen.

Dadurch kann bei Beschädigung einer Hülse 55 etc. durch Versetzen einiger Gehänge sehr schnell eine Umrüstung erfolgen, die zwar an irgendeiner Stelle eine Lücke der Breite annähernd eines Gehänges entstehen läßt, auf der anderen Seite aber nicht das Umhängen sämtlicher Gehänge erfordert, die durchaus eine Gesamtzahl von 1000 in einem Gärschrank überschreiten können.

Der Zahnriemen 7 der Fig. 5b ist dagegen nur einseitig gezahnt und auf der Gegenseite glatt. Auf dieser glatten Seite sind Klötze 29 aus gummiartigem Material befestigt, also aufgeschweißt oder aufvulkanisiert, in denen sich die Hülsen 55 zur Aufnahme der Schwenkzapfen 33 der Gehänge 6 befinden. Durch diese unsymmetrische Ausbildung des Zahnriemens besteht zwar die Notwendigkeit, je nach Umlenkrichtung zwei verschiedene Arten von Umlenkscheiben vorzusehen, auf der anderen Seite ist jedoch die Herstellung des Zahnriemens einfacher, da in seiner Längsmittelebene keine Hindernisse von den Zug aufnehmenden Elementen umgangen werden müssen.

Fig. 6 zeigt ferner eine Detaildarstellung des Leichtmetallprofiles, von welchem die Klapptüren 15 eingefaßt sind:
Dieses Leichtmetallprofil 16 besteht aus einem mittleren, geschlossenen Kastenprofil 18, welches lediglich der Stabilität dient. An dieses Profil schließt sich zur einen Seite hin ein U-Profil 19 so an, daß dessen offene Seite vom Kastenprofil 18 wegweist, wobei der verbindende Schenkel des U-Profiles gleichzeitig Teil des Kastenprofiles 18 ist.

In diesem U-Profil 19 wird die Isolierglasscheibe 17 mittels einer entsprechenden Dichtung 59 gehalten.

In der entgegengesetzten Richtung schließt sich an das Kastenprofil 18 ebenfalls ein U-Profil 19' an, welches jedoch zur Seite der Gesamtrichtung der drei Profile hin offen ist. Auch bei diesem U-Profil 19' ist ein Schenkel, in diesem Fall einer der freiendenden Schenkel, identisch und einstückig mit einer Seite des Kastenprofiles 18.

In das U-Profil 19' wird eine Dichtung 59' eingelegt, über welche die gesamte Klapptür 15 dicht am Rahmen 53 anliegt.

Der äußere frei Schenkel des U-Profiles 19' ist mit dem Scharnier 60 verbunden, welches andererseits am Rahmen 53 befestigt ist.

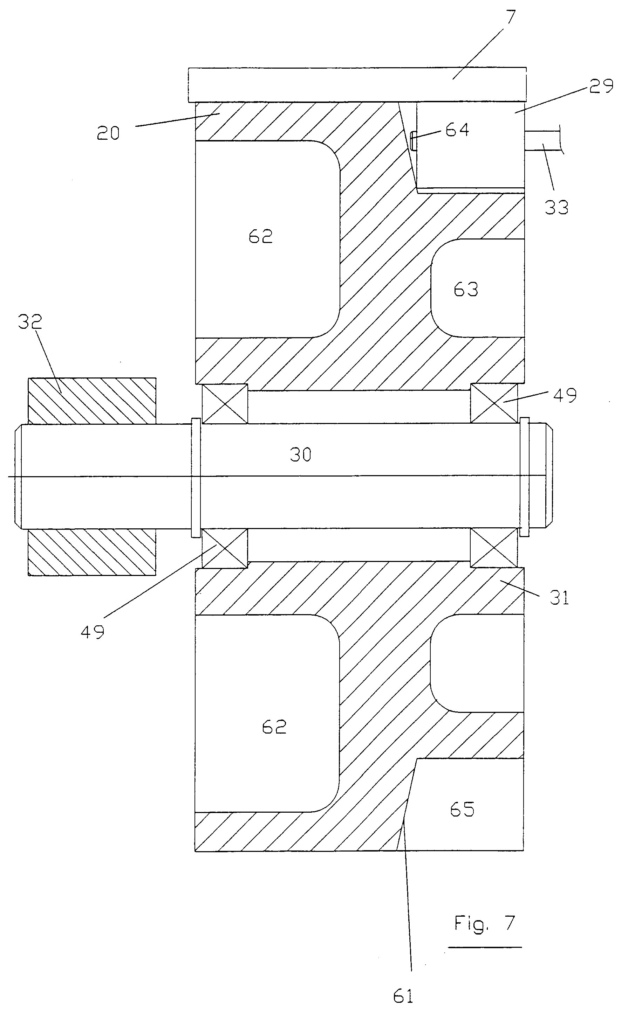

Figur 7 zeigt weiterhin eine Querschnittsdarstellung einer Umlenkrolle 31, wie sie zur Umlenkung eines unsymmetrischen Zahnriemens 7 (in der oberen Bildhälfte dargestellt) mit einseitig aufgesetzten Klötzen 29 dient, wenn die Umlenkrolle 31 auf Seiten der Klötze 29 erfolgt.

Dabei liegt die Umlenkrolle 31 nicht nur in dem Bereich am Zahnriemen 7 an, der neben deren Klötzen 29 liegt, sondern im wesentlichen über die gesamte Breite des Zahnriemens 7.

Für die Klötze 29 sind dabei auf einer Stirnseite der Umlenkrolle 31, in den passenden Abständen über den Umfang verteilt, Aussparungen 65 vorgesehen, die wenigstens zur Mantelfläche der Umlenkrolle 31 hin offen sind, vorzugsweise auch zur Stirnseite hin. Bei diesen Aussparungen 65 ist die im wesentlichen parallel zur Stirnseite der Umlenkrolle 31 verlaufende Wand nicht exakt zu dieser parallel, sondern um 10 bis 30°, vorzugsweise um 10 bis 15°, als Schräge 61 ausgebildet, so daß sich von der Mantelfläche aus nach innen gehend die Querschnittsfläche der Aussparung 65 verringert und am Grund der Aussparung 65 eine Größe etwa entsprechend der Größe der Klötze 29 aufweist.

Durch diese Schrägen 61 werden die Gehänge 6 zwischen den Zahnriemen 7 laufend zentriert, in dem ein zu weit auf der von dem Gehänge 6 gegenüberliegenden Seite aus dem Klotz 29 herausstehendes Ende 64 eines Lagerzapfens des Gehänges 6 beim Hineingleiten des Klotzes 29 in die Aussparung 65 durch dessen Schräge 61 zurückgeschoben wird, so daß die Gehänge 6 immer zentrisch liegen.

Zusätzlich sind in den aus massivem Kunststoffmaterial, zum Beispiel mittels Spritzguß hergestellten Umlenkrollen 31 von den beiden Stirnseiten her materialsparende, ringförmige Ausnehmungen 62, 63 angeordnet, so daß eine ausreichend große Materialstärke übrigbleibt, um die Stabilität der Umlenkrollen zu gewährleisten.

Diese sind wie üblich mittels Wälzlagern 49 auf Achszapfen 30 oder durchgehenden Querachsen 45 (zur Synchronisation) gelagert, die auf den Außenseiten in den Lagerböcken 32 festgeklemmt sind.

Bei dieser Ausbildung der Umlenkrollen 31 ist nicht nur die Schräge 61 von Bedeutung, sondern auch die Tatsache, daß in stirnseitiger Ansicht betrachtet, zwischen den einzelnen Aussparungen 65, die Umlenkrolle bis zu ihrem Außenumfang nach außen reicht und nicht insgesamt auf den verringerten Durchmesser entsprechend dem Boden der Aussparungen 65 reduziert ist. Durch diese Zwischensegmente wird eine ausreichende Unterstützung des Zahnriemens 7 im Bereich zwischen den Klötzen 29 sichergestellt, da ansonsten bei einer relativ starken Zugbelastung zu große ZugkraftUnterschiede zwischen dem Bereich, in dem sich die Klötze 27 befinden und dem danebenliegenden restlichen Bereich auftreten könnten, die zu einem vorzeitigen Verschleiß des Zahnriemens 7 führen.

## Patentansprüche

1. Gärschrank für Teiglinge mit
- wenigstens einem Aufgabebereich (2),
- einer Gärzone (3),
- einer Absteifzone (4), und
- wenigstens einer Abwurfzone (5), wobei
- die Teiglinge in schmalen, wannenförmigen Gehängen (6) liegend durch den Gärschrank (1) transportiert werden,
- die Gehänge (6) an ihren Schmalseiten mit je einem Förderzeug schwenkbar verbunden sind und
- das Gehäuse des Gärschrankes (1) aus wenigstens einem Rahmen und einer Beplankung besteht,
**dadurch gekennzeichnet, daß**
- als Förderzeuge Zahnriemen (7) eingesetzt sind,
- die Gärzone (3) oberhalb der im Bereich der in der Gesamtdurchlaufrichtung (10) hintereinander angeordneten Aufgabebereiche (2) angeordnet ist,
- der Rahmen aus Einzelrahmen besteht, die in Gesamtdurchlaufrichtung (10) hintereinander anschließend angeordnet sind,
- die Einzelrahmen aus seitlichen Rahmenflächen bestehen, die über fest verbundene Querstreben (9) nur an den Stellen verbunden sind, die nicht von einem Zahnriemen (7) umlaufen werden, sowie über nach Montage des Zahnriemens (7) eingesetzte, lösbare Querstreben (51) an Stellen, die von dem Zahnriemen umlaufen werden, und
- an Einzelrahmenaufgabebereichs-Rahmen (11), Gärzonen-Rahmen (12), Zwischenteil-Rahmen (13) und Absteif-Rahmen (14) unterschieden werden, wobei alle Einzelrahmen bis auf die Gärzonen-Rahmen (12) sich über die Gesamthöhe des Gärschrankes (1) erstrecken.

2. Gärschrank nach Anspruch 1,
- **dadurch gekennzeichnet, daß**
die Zahnriemen (7) als endlose Zahnriemen ausgebildet sind.

3. Gärschrank nach einem der vorhergehenden Ansprüche,
**dadurch gekennzeichnet, daß**
die Beplankung des Gärschrankes 1 wenigstens in der Absteifzone (4) aus doppelwandigen Blechtafeln aus nichtrostendem Blech und dazwischen angeordnetem Isoliermaterial besteht und die zugänglichen Stellen des Gärschrankes aus dicht am Rahmen außen aufliegenden Klapptüren (15) bestehen, die aus in Leichtmetallprofilen (16) gefaßten Isolierglasscheiben (17) bestehen.

4. Gärschrank nach Anspruch 3,
**dadurch gekennzeichnet, daß**
die Leichtmetallprofile (16) aus Strangpreßprofilen bestehen, die im Querschnitt aus einem mittleren, geschlossenen Kastenprofil (18) sowie beidseits daran anschließenden U-Profilen (19, 19') bestehen, von denen das eine U-Profil (19) auf der vom Kastenprofil (18) abgewandten Seite offen ist, und das andere U-Profil (19') auf einer dem Kastenprofil (18) benachbarten Seitenfläche offen ist.

5. Gärschrank nach einem der vorhergehenden Ansprüche,
**dadurch gekennzeichnet, daß**
die Zahnriemen (7) an jeweils durch etwa die Hälfte der gesamten Riemenlänge getrennten, räumlich nahe zusammenliegenden Punkten im unteren Bereich des Zwischenteil-Rahmens (13) mittels Treibscheiben (20) angetrieben werden.

6. Gärschrank nach Anspruch 5,
**dadurch gekennzeichnet, daß**
die Treibscheiben (20) von nur einem Motor (24) angetrieben werden, die beiden funktionsgleichen, den unterschiedlichen Zahnriemen zugeordneten Antriebsscheiben (20) jeweils über eine durchgehende torsionsteife Welle drehfest miteinander verbunden sind und die beiden Treibscheiben (20), die auf der gleichen Seite des Gärschrankes (1) liegen und nicht direkt vom Motor (24) angetrieben werden, drehfest mechanisch miteinander verbunden sind.

7. Gärschrank nach einem der vorhergehenden Ansprüche,
**dadurch gekennzeichnet, daß**
der Gärschrank (1) wenigstens eine Filtereinheit (25) gegen Feststoffe aufweist, mittels der die in den Gärschrank (1) eingeblasene, erwärmte bzw. gekühlte Luft gefiltert wird, und der Gärschrank (1) im wesentlichen druckdicht ausgebildet ist und mit einem permanenten leichten Überdruck im Inneren des Gärschrankes betrieben wird.

8. Gärschrank nach einem der vorhergehenden Ansprüche,
**dadurch gekennzeichnet, daß**
in der Gärzone (3) die Zahnriemen (7) in etwa waagerechten Mäandern (22) die Gärzone (3) von unten nach oben durchlaufen.

9. Gärschrank nach einem der vorhergehenden Ansprüche,
**dadurch gekennzeichnet, daß**
in dem Bereich der Absteifzone (4), die sich über die gesamte Höhe des Gärschrankes (1) erstreckt, die Zahnriemen (7) in senkrechten Mäandern (23) geführt sind und eine untere Umlenkstelle zur Riemenspannung verwendet wird.

10. Gärschrank nach einem der vorhergehenden Ansprüche,
**dadurch gekennzeichnet, daß**
der Zahnriemen (7) als in der Seitenansicht zur Mittellinie (27) symmetrischer Riemen ausgebildet ist, die beidseitigen Zähne (26) sich auf jeweils gleicher Höhe befinden und in dem durch die Zähne (26) verdickten Abschnitt des Riemens Befestigungselemente (28) zum Aufnehmen der seitlichen Lagerzapfen (33) der Gehänge (6) symmetrisch zur Mittellinie (27) des Zahnriemens (7) eingearbeitet sind.

11. Gärschrank nach einem der vorhergehenden Ansprüche,
**dadurch gekennzeichnet, daß**
die Zahnriemen (7) auf der einen Seite mit Zähnen (26) versehen und auf der anderen Seite glatt ausgebildet sind, und auf der glatten Seite in Abständen Befestigungselemente (28) zur Aufnahme der Lagerzapfen (33) der Gehänge (6) am Zahnriemen (7) angeordnet sind.

12. Gärschrank nach Anspruch 11,
**dadurch gekennzeichnet, daß**
die Befestigungselemente (28) in Klötzen (29) aus gummiähnlichem Material eingelassen sind, und die Klötze (29) mit den Zahnriemen (7) mittels Vulkanisieren verbunden sind.

13. Gärschrank nach einem der vorhergehenden Ansprüche,
**dadurch gekennzeichnet, daß**
der Abstand der Gehänge (6) zueinander in Richtung des Zahnriemens (7) das zwei- bis fünffache, vorzugsweise das zweibis dreifache des Abstandes der Befestigungselemente (28) im Zahnriemen (7) beträgt.

14. Gärschrank nach einem der vorhergehenden Ansprüche,
**dadurch gekennzeichnet, daß**
die Achsen (30) der Umlenkrollen (31) für den Zahnriemen (7) in Lagerböcken (32) gelagert sind, deren Unterteil (34) auf Schraubbolzen (36), die mit einem rahmenfesten Teil verbunden sind, aufgeschraubt ist und in dem Unterteil (34) an jedem Schraubbolzen (36) hierzu in den Querrichtungen verlaufend Justierschrauben (37) zum Verstellen des Lagerbockes (32) gegenüber dem Rahmen angeordnet sind.

15. Gärschrank nach einem der vorhergehenden Ansprüche,
**dadurch gekennzeichnet, daß**
zur Synchronisierung der beiden parallellaufenden Zahnriemen (7) nach jeweils etwa 10 Metern Länge des Zahnriemens (7) zwei einander zugeordnete Umlenkrollen (31) über eine durchgehende, sich über die gesamte Breite des Gärschrankes (1) erstreckende Querwelle (38) drehfest miteinander verbunden sind.

16. Gärschrank nach einem der vorhergehenden Ansprüche,
**dadurch gekennzeichnet, daß**
an wenigstens zwei Stellen entlang des Zahnriemens (7) bei je zwei analogen gezahnten Umlenkrollen (31) jeweils ein in gleicher Drehlage liegender Zahn (26) mit einem Signalgeber ausgestattet ist,
- ortsfest am Rahmen im Bereich dieser Umlenkrollen (31) ein Sensor zur Feststellung des Durchlaufes des Signalgebers angeordnet ist,
- ein Vergleicher den Phasenversatz der Durchgänge der beiden Signalgeber ermittelt und bei einem Phasenversatz oberhalb eines vorgegebenen, einstellbaren Sollwertes den Antrieb für die Zahnriemen (7) abschaltet.

17. Gärschrank nach einem der vorhergehenden Ansprüche,
**dadurch gekennzeichnet, daß**
bei waagerechten Mäandern die Zahnriemen (7) durch Gleitschienen (39) unterstützt sind, welche aus einem unterhalb und in Richtung des Zahnriemens (7) verlaufenden C-Profil (40) bestehen, in welche Gleitauflagen (41), welche wenigstens an ihrer Oberfläche aus Teflon oder ähnlichem bestehen, mit einem H-förmigen Querschnitt zwischen die freien Enden des C-Profiles (40) eingeschoben und gesichert sind und die Gleitschienen (39) mittels eines Winkelprofiles (42) in ihrem Abstand zur Innenseite des Rahmens variabel befestigbar sind.

18. Gärschrank nach einem der vorhergehenden Ansprüche,
**dadurch gekennzeichnet, daß**
die beiden drehfest gekoppelten, auf derselben Seite des Gärschrankes (1) angeordneten Treibscheiben (20) auf jeweils einer Querachse (45) gelagert sind,
- im Bereich dieser Treibscheiben (20) eine Außenplatte (43) bündig mit der Außenfläche des Rahmens bzw. der Beplankung in den Rahmen eingesetzt ist,
- der mit der Querachse (45) fest verbundene Endflansch (44) mittels in Richtung der Außenplatte (43) in Querrichtungen verschraubbarer Justierschrauben (47) in den beiden Richtungen der Außenplatte verstellbar ist und
- ein Kettenritzel (46) zwischen der Treibscheibe (20) und der Außenplatte (43), im Bereich des Rahmens, drehfest mit der Treibscheibe (20) verbunden ist.

19. Gärschrank nach einem der vorhergehenden Ansprüche,
**dadurch gekennzeichnet, daß**
der Gärschrank (1) eine Schweißvorrichtung (50) umfaßt, die an beliebigen Stellen des Rahmens auf der Innenseite befestigt und auf frei laufende Teile des Zahnriemens (7) zum Befestigen vom Befestigungselemente (28) am Zahnriemen (7) einwirken kann.
